# EUROPEAN PATENT APPLICATION

(11) **EP 3 284 641 A1**
(43) Date of publication of application: **21.02.2018**
(21) Application number: 17184402.0
(22) Date of filing: 02.08.2017
(51) Int. Cl.: B60S 1/08, G02B 26/00, G02B 5/20, G03B 19/02, G06K 9/00

(54) **DUAL-FOCUS CAMERA FOR AUTOMATED VEHICLES**

(30) Priority: 19.08.2016 US 201615241299
(71) Applicant: Delphi Technologies, Inc., Troy, MI 48007-5052 (US)
(72) Inventor: GRIFFIN, Dennis P, NOBLESVILLE, INDIANA 46062 (US); TAYLOR, Ronald, M, Greentown, INDIANA 46936 (US)
(74) Representative: Aptiv

(57) **Abstract**

A dual-focus camera (20) suitable for use on an automated includes an imager (22), a lens-assembly (26), and a negative-meniscus-lens (30) (nml (30)). The imager (22) is used to detect an image (24) of a field-of-view (14). The lens-assembly (26) is used to direct the image (24) from the field-of-view (14) toward the imager (22). The lens-assembly (26) is characterized as focused at a first-distance (28) in the field-of view (14). The negative-meniscus-lens (30) is interposed between the imager (22) and the lens-assembly (26). The negative-meniscus-lens (30) is configured to focus a portion (32) of the image (24) onto the imager (22). The portion (32) is characterized as less than a whole of the image (24) and focused at a second-distance (34) in the field-of-view (14) independent from the first-distance (28).

## Description

### TECHNICAL FIELD OF INVENTION

This disclosure generally relates to a dual-focus camera, and more particularly relates to equipping the camera with a negative-meniscus-lens configured to focus a portion of an image at a distance independent from the distance at which the remainder of the image is focused.

### BACKGROUND OF INVENTION

It is known to install a camera behind a windshield of a vehicle to view an area proximate to, e.g. forward of, the vehicle to detect objects in or adjacent to the travel-path of the vehicle. It is also known to use camera technology to detect raindrops on a windshield for the purpose of controlling automated windshield wipers. However, since the focus-distance necessary to detect objects is much different than the focus-distance used to detect raindrops on the windshield are so different, the typical solution is to utilize two separate cameras.

### SUMMARY OF THE INVENTION

In accordance with one embodiment, a dual-focus camera suitable for use on an automated vehicle is provided. The camera includes an imager, a lens-assembly, and a negative-meniscus-lens (NML). The imager is used to detect an image of a field-of-view. The lens-assembly is used to direct the image from the field-of-view toward the imager. The lens-assembly is characterized as focused at a first-distance in the field-of view. The negative-meniscus-lens is interposed between the imager and the lens-assembly. The negative-meniscus-lens is configured to focus a portion of the image onto the imager. The portion is characterized as less than a whole of the image and focused at a second-distance in the field-of-view independent from the first-distance.

The negative-meniscus-lens may be configured to have a fixed focal-length. The negative-meniscus-lens may be configured to have an adjustable focal-length. The negative-meniscus-lens may be configured to have an adjustable focal-length. The adjustable focal-length may be characterized by a range of adjustability, and the range may be selected such that the second-distance can be adjusted to be equal the first-distance. The camera may include a filter configured so light that passes through the negative-meniscus-lens is filtered different from light that does not pass through the negative-meniscus-lens. The filter for light that passes through negative-meniscus-lens may be characterized as a near-infrared filter

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a vehicle equipped with a camera in accordance with one embodiment;
Fig. 2 is a side view of the camera of Fig. 1 in accordance with one embodiment;
Fig. 3 is an image captured by the camera of Fig. 2 in accordance with one embodiment; and
Fig. 4 is a side view of a negative-meniscus-lens usable in the camera of Fig. 2 in accordance with one embodiment.

### DETAILED DESCRIPTION

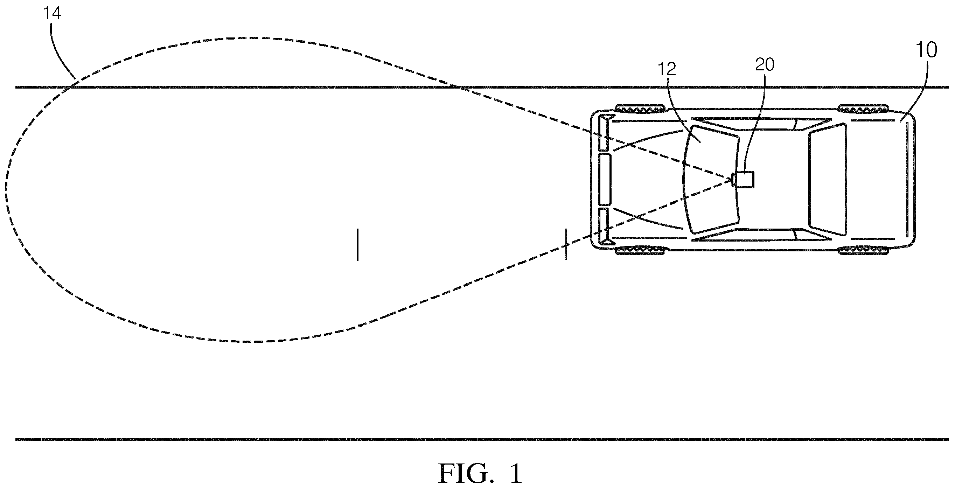

Fig. 1 illustrates a non-limiting example of a dual-focus camera 20, hereafter referred to as the camera 20, which is installed behind a windshield 12 of an automated vehicle 10, i.e. within the interior of the vehicle. In this example the camera 20 is oriented to observe or capture images from a field-of-view 14 forward of the automated vehicle 10, however it is recognized that the camera 20 is suitable for uses elsewhere on the vehicle and directed to different fields-of-view. While the examples presented may be characterized as being generally directed to instances when the vehicle 10 is being operated in an automated-mode, i.e. a fully autonomous mode, where a human operator (not shown) of the vehicle 10 does little more than designate a destination, it is contemplated that the teachings presented herein are useful when the vehicle 10 is operated in a manual-mode. While in the manual-mode the degree or level of automation may be little more than providing steering assistance to a human operator who is generally in control of the steering, accelerator, and brakes of the vehicle 10. That is, the camera 20 may only be used by a safety system of the vehicle 10 to assist the human operator as needed to, for example, keep the vehicle 10 centered in a travel-lane, maintain control of the vehicle 10, and/or avoid interference and/or a collision with another vehicle.

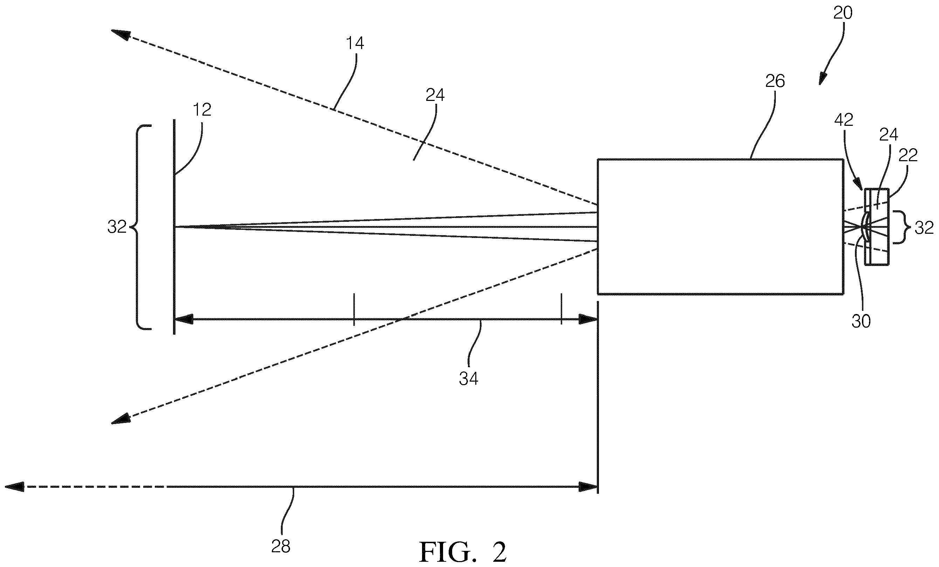

Fig. 2 illustrates a non-limiting example of one possible embodiment of the camera 20 suitable for use on the automated vehicle 10. The camera 20 includes an imager 22 used to detect an image 24 of the field-of-view 14. The imager 22 may be any of many types of commercially available imagers such as an Aptina AR0132 1.3MP (1280x960) or an OmniVision OV7955 0.3MP (640x480) imaging device.

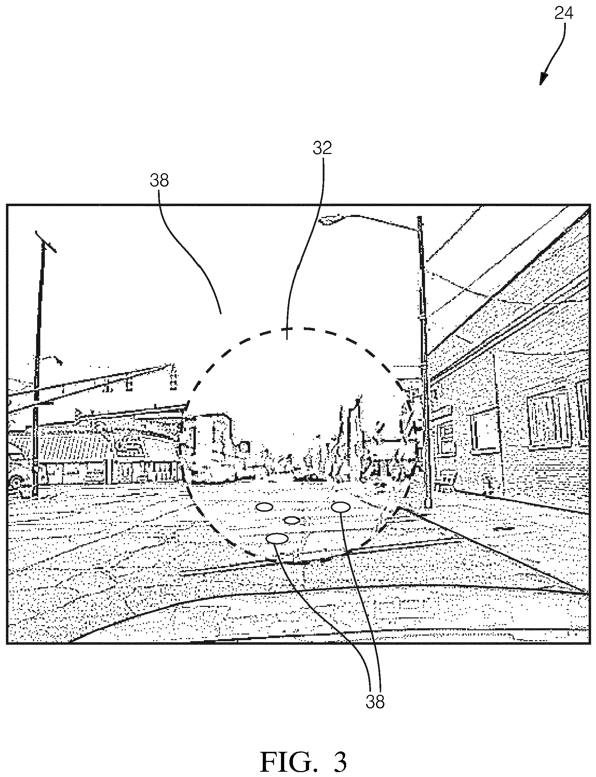

The camera 20 also includes a lens-assembly 26 used to direct the image 24 from the field-of-view 14 toward the imager 22. The lens-assembly 26 may be any of many types of commercially available lens-assemblies known to be suitable for this application, having relatively few or numerous lens elements. In general, for the application suggested by Fig. 1, the lens-assembly 26 is selected to meet the requirements of the application, for example to have a viewing angle, i.e. the angle of the field-of-view 14, suitable for detecting objects on or near the travel-path of the vehicle 10. In particular, the lens-assembly 26 that is selected may be characterized as being focused at or on a first-distance 28 in the field-of view 14. A suitable value for the first-distance 28 is thirty-five meters (35m) from the lens-assembly 26, which is illustrated to be interpreted as well past the left edge of the page showing Fig. 3.

As previously mentioned, camera based technology is used by various vehicle safety systems to detect objects proximate to a vehicle, and by automated wiper systems to detect raindrops on the windshield 12 of the vehicle. Prior solutions for image detection at such disparate ranges (e.g. 35m for object detection and 25mm for raindrop detection) required two cameras. However, the camera 20 described herein is able to do both tasks because the camera 20 is equipped with a negative-meniscus-lens 30, hereafter referred to as the NML 30, which is interposed between the imager 22 and the lens-assembly 26. The NML 30 is generally configured to focus a portion 32 of the image onto the imager 22, where the portion 32 is characterized as less than a whole of the image 24. Furthermore, the portion 32 is characterized as focused at a second-distance 34 in the field-of-view 14 independent from the first-distance 28. For example, the second-distance 34 may be twenty-five millimeters (25mm) so raindrops on the windshield 12 while the first-distance 28 may be thirty-five meters, as previous suggested. As used herein, the term negative-meniscus-lens is used to indicate any type of an optical-element design or a lens-element that could be interposed between the lens-assembly 26 and the imager 22 that could effectively change the focus-distance of the lens-assembly 26 from the first-distance 28 to the second-distance 34.

Fig. 3 illustrates a non-limiting example of the image 24 received or detected by the imager 22 that is produced by the combination of the lens-assembly 26 and the NML 30. The dashed line that segregates the portion 32 from a remainder 38 of the image 24 is not actually present in what is received by the imager 22, but is provided here to help distinguish the portion 32 from the remainder 38. Note that the raindrops 36 in the portion 32 are in-focus, while relatively distance objects such as buildings and other vehicles in the portion 32 are out-of-focus. In contrast, relatively distance objects such as buildings and other vehicles in the remainder 38 are in-focus while any raindrops in the remainder 38 are so out-of-focus as to be undetectable.

In one embodiment, the NML 30 is configured to have a fixed focal-length, i.e. is not adjustable. It is recognized in view of the image 24 that having a fixed focal-length may make it difficult to detect, identify, and/or classify distant objects within the portion 32. However, it is contemplated that distance objects in the remainder 38 may be readily detected, identified, and/or classified, and that objects moving through the remainder 38 toward the portion 32 may be detected by safety system more quickly than would be the case if the portion 32 occupied the entire image as is the case when a camera is only used for raindrop detection, i.e. when all of the field-of-view 14 is focused at the second-distance 34.

Preferably, the NML 30 is configured to have an adjustable focal-length. It is further preferable that the adjustable focal-length is characterized by a range of adjustability, and the range is selected such that the second-distance 34 can be adjusted to be equal the first-distance 28. The technology used to provide for the adjustable focal-length is preferably fast enough so that the variable focus-distance in the portion 32 provided by the NML 30 allows the focus-distance of the portion 32 to be quickly switched between the first-distance and the second-distance so both object detection and raindrop detection can be performed by a single instance of the camera 20.

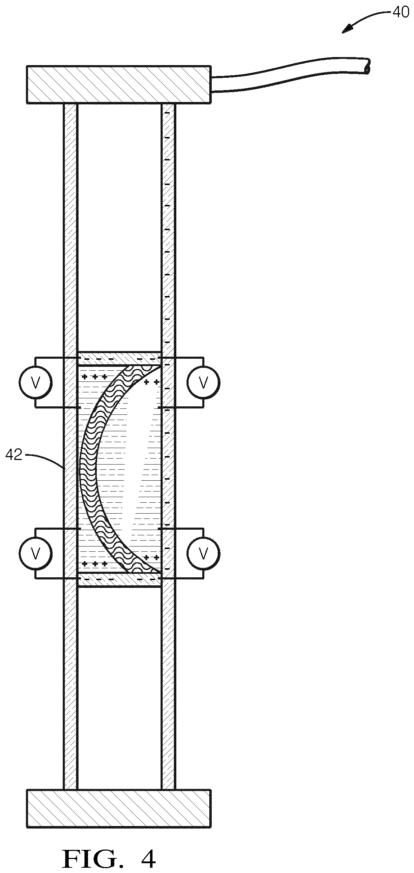

Fig. 4 illustrates a non-limiting example of how a variable-version 40 of the NML 30 can be provided. The variable-version 40 uses an electro-wetting lens set packaged between 2 glass layers. As will be recognized by those in the art, a voltage is applied to a conducting fluid (2 sections) and induces a change in the shape of the conducting fluid relative to the insulating fluid. Varying the voltage creates changes in the shapes of the lens, including the shape needed to provide the variable-version 40 of the NML 30. Two separate conducting fluid compartments are used to create the inner and outer NML curvatures. The conducting and insulating fluids have different indices of refraction and allow the combination to create various lens refractive characteristics. The glass layers containing the lens set uses a transparent conductive film layer (e.g. ITO or Indium Tin Oxide) to facilitate the voltage drop across the conductive fluid allowing for the shape change. The typical response is thirty milliseconds with a maximum voltage requirement of 60V rms.

In order to optimize the detection of the raindrops 36 in the portion 32 and distant objects in the remainder 38, it may be advantageous if the camera 20 includes a filter 42 configured so light that passes through the NML 30 is filtered different from light that does not pass through the negative-meniscus-lens. By way of example and not limitation, it may be preferable if the filter 42 for light from the portion that passes through NML 30 is characterized as a near-infrared (NIR) filter as most rain sensing uses active NIR LEDs whose light is directed at the windshield 12, and a reflected signal from the windshield 12 is sensed, where the LED NIR wavelength spectrum is about 800-1000 nm. The outer area of the filter 42 where light for the remainder 38 passes could be either a visible color or visible monochrome filter depending upon the outer field camera function. It is also recognized that using an outer field visible color filter camera allows better discrimination for some object characteristics, e.g. - traffic lighting, lane marking colors.

Accordingly, a dual-focus camera (the camera 20) is provided. The camera 20 provides for raindrop detection and object detection using a single camera.

While this invention has been described in terms of the preferred embodiments thereof, it is not intended to be so limited, but rather only to the extent set forth in the claims that follow.

## Claims

1. A dual-focus camera (20) suitable for use on an automated vehicle (10), said camera (20) comprising:
an imager (22) used to detect an image (24) of a field-of-view (14);
a lens-assembly (26) used to direct the image (24) from the field-of-view (14) toward the imager (22), said lens-assembly (26) characterized as focused at a first-distance (28) in the field-of view (14); and
a negative-meniscus-lens (30) interposed between the imager (22) and the lens-assembly (26), said negative-meniscus-lens (30) configured to focus a portion (32) of the image (24) onto the imager (22), said portion (32) characterized as less than a whole of the image (24) and focused at a second-distance (34) in the field-of-view (14) independent from the first-distance (28).

2. The camera (20) in accordance with claim 1, wherein the negative-meniscus-lens (30) is configured to have a fixed focal-length.

3. The camera (20) according to any one of the preceding claims, wherein the negative-meniscus-lens (30) is configured to have an adjustable focal-length.

4. The camera (20) in accordance with claim 3, wherein the adjustable focal-length is **characterized by** a range of adjustability, and the range is selected such that the second-distance (34) can be adjusted to be equal the first-distance (28).

5. The camera (20) according to any one of the preceding claims, wherein the camera (20) includes a filter (42) configured so light that passes through the negative-meniscus-lens (30) is filtered different from light that does not pass through the negative-meniscus-lens (30).

6. The camera (20) according to any one of the preceding claims, wherein the filter (42) for light that passes through negative-meniscus-lens (30) is characterized as a near-infrared filter (42).
